(19) **Europäisches Patentamt**

European Patent Office

Office européen des brevets

(11) **EP 3 740 392 B1**

(12) **EUROPÄISCHE PATENTSCHRIFT**

(45) Veröffentlichungstag und Bekanntmachung des Hinweises auf die Patenterteilung:
**25.12.2024  Patentblatt 2024/52**

(21) Anmeldenummer: **19701791.6**

(22) Anmeldetag: **15.01.2019**

(51) Internationale Patentklassifikation (IPC):
**B60K 7/00** *(2006.01)*     **B60K 23/04** *(2006.01)*
**B60W 30/04** *(2006.01)*

(52) Gemeinsame Patentklassifikation (CPC):
**B60W 30/04; B60K 7/0007;** B60G 2800/213;
B60G 2800/963; B60G 2800/965; B60K 23/04;
B60K 2023/043; B60T 2230/03; B60W 2030/043;
B60W 2520/125; B60W 2520/30; B60W 2520/406;
B60W 2710/083; B60W 2710/207; B60W 2720/266;
(Forts.)

(86) Internationale Anmeldenummer:
**PCT/EP2019/050865**

(87) Internationale Veröffentlichungsnummer:
**WO 2019/141649 (25.07.2019 Gazette 2019/30)**

(54) **VERFAHREN ZUM VERMEIDEN VON ÜBERSCHLÄGEN EINES KRAFTFAHRZEUGES MITTELS TORQUE VECTORING, KORRESPONDIERENDES LENKSYSTEM**

METHOD FOR PREVENTING ROLL-OVER OF A MOTOR VEHICLE BY MEANS OF TORQUE VECTORING, CORRESPONDING STEERING SYSTEM

PROCÉDÉ PERMETTANT D'ÉVITER DES TONNEAUX D'UN VÉHICULE AUTOMOBILE PAR VECTORISATION DU COUPLE, SYSTEME DE DIRECTION CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **19.01.2018  DE 102018101182**

(43) Veröffentlichungstag der Anmeldung:
**25.11.2020  Patentblatt 2020/48**

(73) Patentinhaber:
• **thyssenkrupp Presta AG**
  **9492 Eschen (LI)**
• **thyssenkrupp AG**
  **45143 Essen (DE)**

(72) Erfinder: **LAPIS, Leonard**
**9466 Sennwald (CH)**

(74) Vertreter: **thyssenkrupp Intellectual Property GmbH**
**ThyssenKrupp Allee 1**
**45143 Essen (DE)**

(56) Entgegenhaltungen:
WO-A1-2006/026259     DE-A1- 102004 046 985
DE-A1- 102005 046 776     DE-A1- 102009 045 234
DE-A1- 102010 017 647

EP 3 740 392 B1

(52) Gemeinsame Patentklassifikation (CPC): (Forts.)
B60W 2720/30; B60W 2720/406; B60Y 2200/91;
B60Y 2300/02; B60Y 2300/82

**Beschreibung**

Die vorliegende Erfindung betrifft ein Verfahren zum Vermeiden von Überschlägen eines Kraftfahrzeuges bei Querlastwechsel mit den Merkmalen des Oberbegriffs des Anspruchs 1 und einem Steer-by-Wire-Lenksystem eines Kraftfahrzeuges mit den Merkmalen des Oberbegriffs des Anspruchs 8.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt.

Um instabile Fahrsituationen, wie Übersteuern oder Untersteuern zu vermeiden, ist das sogenannte "Torque Vectoring" bekannt, bei dem ein Antriebsmoment zwischen einem linken und einem rechten Fahrzeugrad mittels eines speziell ausgebildeten Differenzialgetriebes verteilt wird, um auf diese Weise dem Untersteuern oder Übersteuern entgegenzuwirken. So wird bei einer instabilen Fahrsituation ein Rad abgebremst, während die Antriebskraft an das Rad geleitet wird, welches die größte Giermomentreduktion aufweist, d. h. kommt es zum Untersteuern, beaufschlagt die Steuerung das kurvenäußere Rad über eine separate Kupplung mit mehr Antriebskraft, sodass das Fahrzeug in die Kurve "hineingeschoben" wird. Bei einem starken Querlastwechsel kann es dazu kommen, dass gleichzeitig das kurveninnere Rad komplett entlastet und das kurvenäußere Rad komplett belastet wird. Das belastete Rad kann dabei eine Querkraft übertragen, die ausreicht das Kraftfahrzeug umzukippen.

Aus dem Stand der Technik ist eine Überschlagsstablisierung (ARS) bekannt, bei der das kurvenäußere Vorderrad in kritischen Situationen oder bei Überschlagsgefahr abgebremst wird, sodass die Seitenkraft an diesem Rad reduziert wird. Gleichzeitig entsteht durch Abbremsung dieses Rads ein Giermoment um die Hochachse des Fahrzeugs, welches dem Einlenken des Fahrzeugs entgegenwirkt. Durch die Verminderung der Seitenkraft und die Entstehung des Giermoments wird die Querbeschleunigung reduziert, wodurch das Überschlagsrisiko gesenkt werden kann. Als nachteilig erweist sich diese Lösung dahingehend, dass das Fahrzeug über das Vorderrad untersteuernd aus der Kurve hinausrutscht und durch das Abbremsen zusätzlich die Fahrzeuggeschwindigkeit herabgesetzt wird. Derartige Systeme sind beispielsweise bekannt aus DE 10 2004 046 985 A1, DE 10 2010 017 647 A1 oder WO 2006/026259 A1.

Aus DE 10 2009 045 234 A1 ist ferner ein Verfahren zum Betreiben einer Antriebsvorrichtung eines Fahrzeuges bekannt, die wenigstens zwei Radnabenmotoren aufweist, die mittels einer Master-Slave-Kommunikation miteinander kommunizieren.

Schließlich ist aus DE 10 2005 046 776 A1 eine Wankstabilitätssteuerung unter Verwendung eines Vierradantriebs bekannt, bei der in Reaktion auf einen potenziellen Überrollzustand zum Verhindern des Überrollens des Fahrzeugs aktive Differentialgetriebe allein oder zusätzlich zu einem Abbremsen eingesetzt werden.

Es ist Aufgabe der vorliegenden Erfindung, ein verbessertes Verfahren und ein Steer-by-Wire-Lenksystem zum Vermeiden von Überschlägen eines Kraftfahrzeuges bei starkem Querlastwechsel anzugeben.

Diese Aufgabe wird von einem Verfahren zum Vermeiden von Überschlägen eines Kraftfahrzeuges bei Querlastwechsel mit den Merkmalen des Anspruchs 1 und einem Steer-by-Wire-Lenksystem eines Kraftfahrzeuges mit den Merkmalen des Anspruchs 8 gelöst.

Demnach ist ein Verfahren zum Vermeiden von Überschlägen eines Kraftfahrzeuges bei Querlastwechsel vorgesehen, wobei das Kraftfahrzeug einen Einzelradantrieb aufweist, der dazu ausgebildet ist, ein durch den Querlastwechsel belastetes Rad unabhängig von dem wenigstens einem anderen Rad des Kraftfahrzeuges anzutreiben, wobei folgende Verfahrensschritte dabei vorgesehen sind:

- Erkennen eines kritischen Zustandes des Kraftfahrzeuges bei Querlastwechsel,

- Aufbringen eines Antriebsdrehmomentes durch einen Einzelradantrieb auf das durch den Querlastwechsel belastete Rad des Kraftfahrzeuges, derart, dass das durch den Querlastwechsel belastete Rad in Schlupf gebracht wird, und

- Einlenken des durch den Querlastwechsel belasteten Rades des Kraftfahrzeuges in Richtung einer Fahrtrichtung, derart, dass ein Überschlagen des Kraftfahrzeuges verhindert werden kann.

Das Kraftfahrzeug wird durch dieses Verfahren ins Rutschen gebracht, es kippt aber nicht um. Vorzugsweise ist das Antriebsdrehmoment das maximale Drehmoment eines Antriebsmotors. Dabei ist es bevorzugt, wenn das Antriebsdrehmoment das durch den Querlastwechsel belastete Rad in Fahrtrichtung antreibt.

In einer bevorzugten Ausführungsform erfolgt das Aufbringen des Antriebsdrehmomentes und das Einlenken des durch den Querlastwechsel belasteten Rades für ein begrenztes Zeitintervall, das mindestens so lang ist, wie ein kritischer Zustand andauert.

Insbesondere liegt das begrenzte Zeitintervall in einem Bereich zwischen 0,1s und 0,3s.

In einer bevorzugten Ausführungsform erfolgt das Aufbringen des Antriebsdrehmomentes und das Einlenken des durch den Querlastwechsel belasteten Rades in einem automatischen Lenkungszustand der Kraftfahrzeuglenkung.

Im Falle einer Kurvenfahrt ist das durch den Querlastwechsel belastete Rad das kurvenäußere Rad.

Weiterhin ist ein Steer-by-Wire-Lenksystem eines Kraftfahrzeuges mit einer zwei lenkbare Räder aufweisenden lenkbaren Vorderradachse vorgesehen, wobei die Vorderradachse einen Einzelradantrieb aufweist, der mittels einer Antriebssteuerung den lenkbaren Rädern zugeordnete Radantriebe einzeln antreibt, und wobei ein elektrischer Lenksteller vorgesehen ist, der die Stellung der lenkbaren Räder steuert, wobei die Antriebssteuerung und der Lenksteller derart ausgebildet sind, das zuvor beschriebene Verfahren auszuführen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:

Fig. 1: eine schematische Darstellung eines Steer-by-Wire-Lenksystems mit zwei separaten Radantrieben auf der Vorderachse,

Fig. 2: eine schematische Darstellung eines Steer-by-Wire-Lenksystems in Draufsicht,

Fig. 3: ein Diagramm des zeitlichen Verlaufs von Drehmoment und Radlenkwinkel zur Ansteuerung des kurvenäußeren Rades,

Fig. 4: eine schematische Darstellung der auf das Kraftfahrzeug wirkenden Kräfte, sowie

Fig. 5: ein Diagramm des Verlaufs der Reifenquerkraft in Abhängigkeit von dem Antriebsmoment.

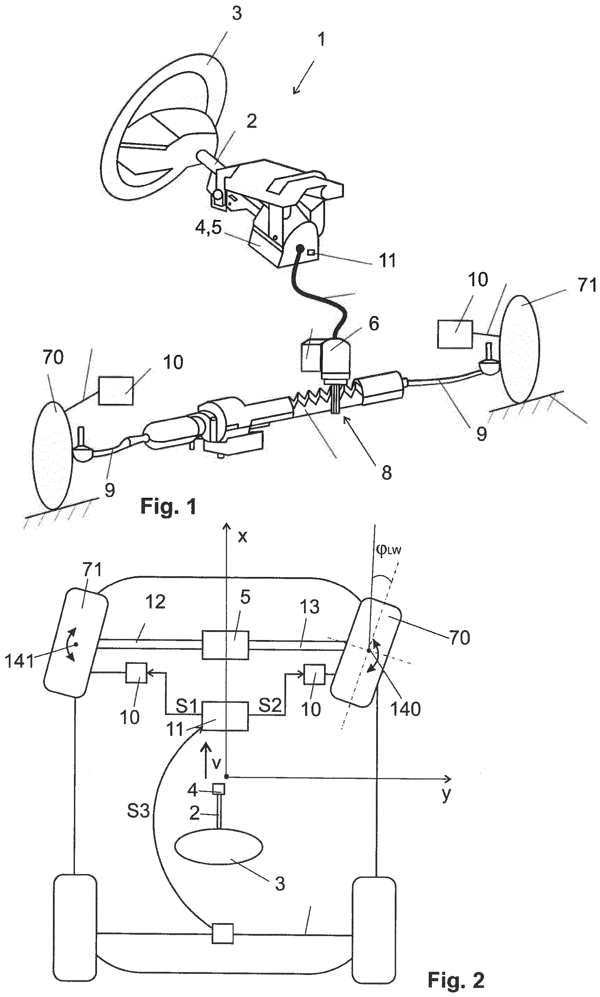

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Des Weiteren ist an der Lenkwelle 2 ein Feedback-Aktuator 4 angebracht, welcher dazu dient, die Rückwirkungen von der Fahrbahn auf das Lenkrad 3 zu simulieren und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen an eine Lenkungssteuereinheit 5 weitergegeben, die in Abhängigkeit von weiteren Eingangsgrößen einen elektrischen Lenksteller 6 ansteuert, welcher die Stellung der gelenkten Räder 70,71 steuert. Der Lenksteller 6 wirkt über ein Lenkstangen-Lenkgetriebe 8, wie beispielsweise einem Zahnstangen-Lenkgetriebe, sowie über Spurstangen 9 und anderen Bauteilen mittelbar auf die gelenkten Räder 70,71. Den lenkbaren Rädern 70,71 sind Antriebsmotoren 10 zugeordnet, die die Räder 70,71 in Form eines Einzelradantriebs separat antreiben. Eine Antriebssteuerung 11 bestimmt anhand des vom Drehwinkelsensor gemessenen Drehwinkels der Lenkwelle 2 und weiteren Signalen die Antriebsmomente für die lenkbaren Räder 70,71 und steuert den jeweiligen Antriebsmotor 10 entsprechend an.

In Figur 2 ist schematisch das Kraftfahrzeug mit den beiden Achsen dargestellt, wobei der Antrieb der lenkbaren Räder 70,71 auf der Vorderachse 12 angeordnet ist. Die Vorderachse 12 umfasst bezogen auf eine Fahrtrichtung ein erstes lenkbares Rad 71 und ein zweites lenkbares Rad 70, die über die Zahnstange 13 des Zahnstangenlenkgetriebes miteinander verbunden sind. Bei Verlagerung der Zahnstange 13 quer zur Fahrtrichtung x nach rechts oder links, werden die Räder um einen jeweiligen Schwenkpunkt 140, 141 verschwenkt. Ein erster Antriebsmotor 10 ist in Fahrtrichtung links und ein zweiter Antriebsmotor 10 ist in Fahrtrichtung rechts angeordnet. Die Radantriebsmotoren 10 sind jeweils über Antriebswellen mit den lenkbaren Rädern 70,71 verbunden. Bei den Radantriebsmotoren 10 handelt es sich vorzugsweise um Elektromotoren. Die Antriebssteuerung 11 steuert über eine erste Signalleitung S1 den ersten Antriebsmotor 10 und über eine zweite Signalleitung S2 den zweiten Antriebsmotor 10 an. Die Antriebssteuerung 11 empfängt zudem Informationen über den Zustand der Hinterachse über eine Signalleitung S3 geleitet. Das Fahrzeug bewegt sich in Fahrtrichtung x mit einer Geschwindigkeit v.

Ein kritischer Lastwechsel, der zu einem Überschlagen des Kraftfahrzeuges führen könnte, wird anhand der gemessenen Querbeschleunigung des Kraftfahrzeuges und den bekannten Größen der Masse, der Spurweite und der Schwerpunkthöhe erkannt. Bei Erkennung des kritischen Zustands erfolgt der Wechsel von einem manuellen Lenkungszustand in einen automatischen Lenkungszustand. Unter "manuellen Lenkungszustand" wird in diesem Fall verstanden, dass der Fahrer durch Betätigen des Lenkrades ein Einlenken der Räder bewirkt. Dabei können Assistenzsysteme das Einlenken der Räder beeinflussen. In dem automatischen Lenkungszustand hingegen übernimmt das Steer-by-Wire Lenksystem das Ansteuern der Räder unabhängig von der Lenkeingabe am Lenkrad. Der automatische Lenkungszustand wird für ein begrenztes Zeitintervall $\Delta t$ aufrechtgehalten und zwar so lange wie der kritische Zustand andauert, bevorzugt in einem Bereich zwischen 0,1s und 0,3s.

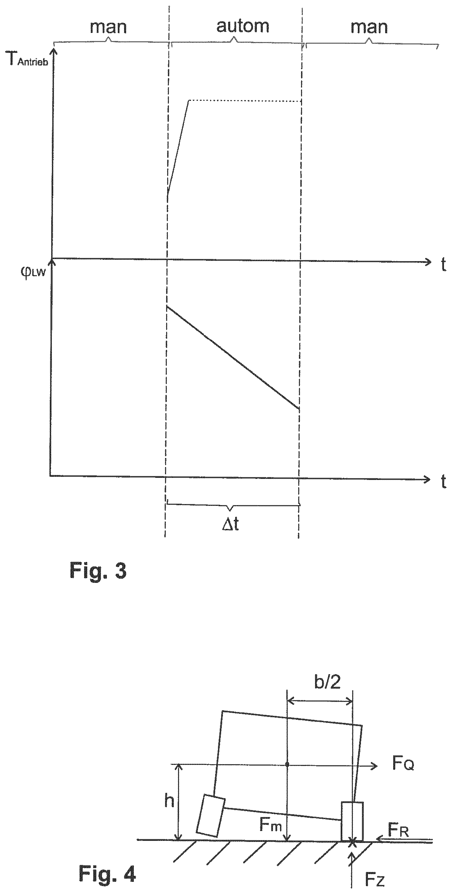

Während des automatischen Lenkungszustandes wird auf das belastete kurvenäußere Rad ein Drehmoment $T_{Antrieb}$ sowie ein Radlenkwinkel $\varphi_{LW}$ aufgebracht. Figur 3 zeigt den zeitlichen Verlauf des Drehmomentes $T_{Antrieb}$ sowie des Radlenkwinkels $\varphi_{LW}$. Das Antriebsdrehmoment $T_{Antrieb}$ dreht das belastete Rad in Fahrtrichtung x. Vorzugsweise ist das aufgebrachte Antriebsdrehmoment $T_{Antrieb}$, das vom Antriebsmotor 10 maximal zur Verfügung gestellte Drehmoment, das kurzzeitig auch weit über das Dauer-Drehmoment hinausgehen kann. Das belastete Rad wird dadurch in Schlupf gebracht. Unter dem Begriff "Schlupf" wird der Zustand verstanden, wenn sich beim Beschleunigen des Fahrzeugrades die Oberflächengeschwindigkeit des Rades von der Fahrzeuggeschwindigkeit v unterscheidet. Der Antriebsschlupf limitiert die von dem Rad auf die Straße übertragbare Querkraft. Das Fahrzeug fängt an zu rutschen. Dabei haben alle Räder Kontakt zur Fahrbahnoberfläche. Ein Kippen des Fahrzeuges kann somit verhindert werden. Während der Antriebsmomentspitze wird das angetriebene Rad etwas zurück in Richtung Fahrtrichtung gelenkt, damit die Querkräfte auf das Fahrzeug nicht weiter steigen, denn ein kleinerer Radlenkwinkel $\varphi_{LW}$ erzeugt weniger Querbeschleunigung und dadurch auch weniger Querkraft $F_Q$. Das Rad wird nur so viel zurück gelenkt, dass das Fahrzeug nicht mehr kippt, d. h. es wird nicht unbedingt die Fahrtrichtung beim Zurücklenken erreicht.

Während des Eingriffszeitraums $\Delta t$ soll das Fahrzeug weg von einem Zustand gebracht werden, in welchem das Fahrzeug zu kippen droht.

Dabei gilt folgender Zusammenhang, wie in der Figur 4 dargestellt:

$F_Q*h=F_m*b/2$, wobei gemäss der Kraftgleichung:
In Querrichtung: $F_Q=F_R$

In Vertikalrichtung: $F_N=F_m=m*g$,
wobei m die Fahrzeugmasse ist, g die Erdbeschleunigung und b der Fahrzeugbreite vom Fahrzeugmittelpunkt bis zum Radmittelpunkt entspricht und h die Fahrzeughöhe von der Fahrbahn bis zum Fahrzeugmittelpunkt ist. In diesem Zustand kippt das Fahrzeug noch nicht. Es befindet sich jedoch im Grenzzustand zum Kippen. Daher muss nachfolgend die Reifenquerkraft $F_R$ zwischen Fahrzeugrädern und Strasse reduziert werden. Hierzu besteht der Zusammenhang, dass der Antriebsschlupf die übertragbare Reifenquerkraft $F_Q$ reduziert. Dadurch werden die durchdrehenden Fahrzeugräder auf der belasteten Seite weniger Querkraft übertragen, sodass das Fahrzeug in Querrichtung entlang eines grösseren Kurvenradius rutscht.

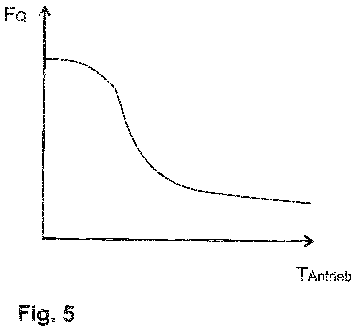

Zur Reduktion der Reifenquerkraft $F_R$ muss das Antriebsmoment $T_{Antrieb}$ erhöht werden. Der Zusammenhang zwischen Reifenkraft und Antriebsmoment ist in Figur 5 dargestellt.

Um den Kurvenradius zu erhöhen, muss die Fahrzeugquerkraft $F_Q$ reduziert werden.

$$F_Q=m*a_y,$$

wobei die Querbeschleunigung $a_y = \dfrac{v^2}{l \times \varphi lw\left(\dfrac{1 + v}{vch}\right)^\wedge 2}$

wobei l=Achsabstand zwischen einem Radmittelpunkt eines Vorderrads und einem Radmittelpunkt eines hinteren Radmittelpunkts entlang derselben Fahrzeugseite entspricht; m die Fahrzeugmasse ist, v die Fahrzeuggeschwindigkeit und $v_{ch}$ die charakteristische Geschwindigkeit ist.

Zur Reduktion der Reifenquerkraft muss der Radlenkwinkel $\varphi_{LW}$ vermindert werden, weil dadurch, dass die Reifen in eine gerade Position gelenkt werden, der Kurvenradius grösser wird.

Durch die Kombination aus Drehmoment $T_{Antrieb}$ und Radlenkwinkel $\varphi_{LW}$ rutscht das Fahrzeug, kippt aber nicht um und ein schnellerer Übergang in den manuellen Zustand kann ermöglicht werden. Nach dem begrenzten Zeitintervall $\Delta t$ übernimmt der Fahrer wieder das Lenken und das Drehmoment $T_{Antrieb}$ und der Radlenkwinkel $\varphi_{LW}$ werden wieder reduziert bzw. nicht mehr aufgeprägt. Wird detektiert, dass der kritische Zustand nicht mehr vorliegt, kann auch vor Ablauf der Eingriffszeit $\Delta t$ vom automatischen in den manuellen Zustand gewechselt werden.

**Patentansprüche**

1. Verfahren zum Vermeiden von Überschlägen eines Kraftfahrzeuges bei Querlastwechsel, wobei ein kritischer Zustand des Kraftfahrzeuges bei Querlastwechsel erkannt wird, **dadurch gekennzeichnet, dass** das Kraftfahrzeug einen Einzelradantrieb aufweist, der dazu ausgebildet ist, ein durch den Querlastwechsel belastetes Rad (70,71) unabhängig von dem wenigstens einem anderen Rad (70,71) des Kraftfahrzeuges anzutreiben, und dass folgende Verfahrensschritte vorgesehen sind:

   • Aufbringen eines Antriebsdrehmomentes ($T_{Antrieb}$) durch einen Einzelradantrieb (150,151) auf das durch den Querlastwechsel belastete Rad (70,71) des Kraftfahrzeuges, derart, dass das durch den Querlastwechsel belastete Rad (70,71) in Schlupf gebracht wird, so dass das belastete Rad (70, 71) durchdreht, wobei der Antriebsschlupf die übertragbare Reifenquerkraft ($F_Q$) reduziert und das Kraftfahrzeug in Querrichtung entlang eines größeren Kurvenradius rutscht, und
   • Einlenken des durch den Querlastwechsel belasteten Rades (70,71) des Kraftfahrzeuges in Richtung einer Fahrtrichtung (x), derart, dass ein Überschlagen des Kraftfahrzeuges verhindert werden kann.

2. Verfahren nach Anspruch 1, **dadurch gekennzeichnet, dass** das Antriebsdrehmoment ($T_{Antrieb}$) das maximale Drehmoment eines Antriebsmotors (10) ist.

3. Verfahren nach Anspruch 1 oder 2, **dadurch gekennzeichnet, dass** das Antriebsdrehmoment ($T_{Antrieb}$) das durch den Querlastwechsel belastete Rad (70,71) in Fahrtrichtung (x) antreibt.

**4.** Verfahren nach einem der vorhergehenden Ansprüche, **dadurch gekennzeichnet, dass** das Aufbringen des Antriebsdrehmomentes ($T_{Antrieb}$) und das Einlenken des durch den Querlastwechsel belasteten Rades für ein begrenztes Zeitintervall ($\Delta t$) erfolgt, das mindestens so lang ist, wie ein kritischer Zustand andauert.

**5.** Verfahren nach Anspruch 4, **dadurch gekennzeichnet, dass** das begrenzte Zeitintervall ($\Delta t$) in einem Bereich zwischen 0,1s und 0,3s liegt.

**6.** Verfahren nach einem der vorhergehenden Ansprüche, **dadurch gekennzeichnet, dass** das Aufbringen des Antriebsdrehmomentes ($T_{Antrieb}$) und das Einlenken des durch den Querlastwechsel belasteten Rades (70,71) in einem automatischen Lenkungszustand der Kraftfahrzeuglenkung erfolgt.

**7.** Verfahren nach einem der vorhergehenden Ansprüche, **dadurch gekennzeichnet, dass** das durch den Querlastwechsel belastete Rad (70,71) das kurvenäußere Rad ist.

**8.** Steer-by-Wire-Lenksystem eines Kraftfahrzeuges mit einer zwei lenkbare Räder (70,71) aufweisenden lenkbaren Vorderradachse (12), wobei die Vorderradachse (12) einen Einzelradantrieb aufweist, der mittels einer Antriebssteuerung (11) den lenkbaren Rädern (70,71) zugeordnete Radantriebe (150,151) einzeln antreibt, und wobei ein elektrischer Lenksteller (6) vorgesehen ist, der die Stellung der lenkbaren Räder (70,71) steuert, **dadurch gekennzeichnet, dass** die Antriebssteuerung (11) und der Lenksteller (6) derart ausgebildet sind, das Verfahren nach einem der Ansprüche 1 bis 7 auszuführen.

**Claims**

**1.** A method for preventing roll-over of a motor vehicle in the event of a transverse load change, wherein a critical state of the motor vehicle in the event of a transverse load change is identified, **characterized in that** the motor vehicle has an individual-wheel drive which is designed to drive a wheel (70, 71) that is loaded by the transverse load change independently of the at least one other wheel (70, 71) of the motor vehicle, and **in that** the following method steps are provided:

• Applying a drive torque ($T_{Drive}$) by an individual-wheel drive (150, 151) to the motor vehicle wheel (70, 71) that is loaded by the transverse load change in such a manner that the wheel (70, 71) that is loaded by the transverse load change is caused to slip, such that the loaded wheel (70, 71) spins, wherein the drive slip reduces the transmissible transverse tyre force ($F_Q$) and the motor vehicle slips in the transverse direction along a greater bend radius, and
• Steering the motor vehicle wheel (70, 71) that is loaded by the transverse load change in the direction of a direction of travel (x) in such a manner that a roll-over of the motor vehicle can be prevented.

**2.** The method as claimed in claim 1, **characterized in that** the drive torque ($T_{Drive}$) is the maximum torque of a drive motor (10).

**3.** The method as claimed in claim 1 or 2, **characterized in that** the drive torque ($T_{Drive}$) drives the wheel (70, 71) that is loaded by the transverse load change in the direction of travel (x).

**4.** The method as claimed in one of the preceding claims, **characterized in that** the application of the drive torque ($T_{Drive}$) and the steering of the wheel that is loaded by the transverse load change take place for a limited period of time ($\Delta t$) which is at least as long as a critical state lasts.

**5.** The method as claimed in claim 4, **characterized in that** the limited period of time ($\Delta t$) lies within a range of between 0.1 s and 0.3 s.

**6.** The method as claimed in one of the preceding claims, **characterized in that** the application of the drive torque ($T_{Drive}$) and the steering of the wheel (70, 71) that is loaded by the transverse load change take place in an automatic steering state of the motor vehicle steering system.

**7.** The method as claimed in one of the preceding claims, **characterized in that** the wheel (70, 71) that is loaded by the transverse load change is the wheel on the outside of the bend.

**8.** A steer-by-wire steering system of a motor vehicle having a steerable front wheel axle (12) having two steerable wheels (70, 71), wherein the front wheel axle (12) has an individual-wheel drive which uses a drive controller (11) to individually drive wheel drives (150, 151) assigned to the steerable wheels (70, 71), and wherein an electric steering actuator (6) is provided which controls the position of the steerable wheels (70, 71), **characterized in that** the drive controller (11) and the steering actuator (6) are designed as to carry out the method as claimed in one of claims 1 to 7.

**Revendications**

**1.** Procédé de prévention du renversement d'un véhicule à moteur en cas de changement de charge transversale, dans laquelle un état critique du véhicule à moteur en cas de changement de charge transversale est identifié, **caractérisée par** en ce que le véhicule à moteur est équipé d'une transmission individuelle conçue pour entraîner une roue (70, 71) chargée par le changement de charge transversale indépendamment d'au moins une autre roue (70, 71) du véhicule à moteur, et en ce que les étapes suivantes de la procédé sont prévues:

• Appliquer un couple d'entraînement ($T_{Drive}$) par un entraînement individuel (150, 151) à la roue du véhicule à moteur (70, 71) qui est chargée par le changement de charge transversale de telle manière que la roue (70, 71) qui est chargée par le changement de charge transversale est amenée à glisser, de telle sorte que la roue chargée (70, 71) tourne, dans lequel le glissement d'entraînement réduit la force transversale du pneu ($F_Q$) transmissible et le véhicule à moteur glisse dans la direction transversale le long d'un rayon de courbure plus grand, et

• Diriger la roue du véhicule à moteur (70, 71) qui est chargée par le changement de charge transversal dans la direction d'un sens de marche (x) de manière à empêcher le renversement du véhicule à moteur.

2. Procédé selon la revendication 1, **caractérisée en ce que** le couple d'entraînement ($T_{Drive}$) est le couple maximal d'un moteur d'entraînement (10).

3. Procédé selon la revendication 1 ou 2, **caractérisée en ce que** le couple d'entraînement ($T_{Drive}$) entraîne la roue (70, 71) qui est chargée par le changement de charge transversal dans la direction de déplacement (x).

4. Procédé selon l'une des revendications précédentes, **caractérisé en ce que** l'application du couple d'entraînement ($T_{Drive}$) et le braquage de la roue chargée par la variation de charge transversale ont lieu pendant une durée limitée (Δt) qui est au moins égale à la durée d'un état critique.

5. Procédé selon la revendication 4, **caractérisée en ce que** la période de temps limitée (Δt) est comprise entre 0,1 s et 0,3 s.

6. Procédé selon l'une des revendications précédentes, **caractérisé en ce que** l'application du couple d'entraînement ($T_{Drive}$) et la direction de la roue (70, 71) qui est chargée par le changement de charge transversale ont lieu dans un état de direction automatique du système de direction du véhicule à moteur.

7. Procédé selon l'une des revendications précédentes, **caractérisé en ce que** la roue (70, 71) qui est chargée par le changement de charge transversal est la roue située à l'extérieur du virage.

8. Système de direction à commande électrique d'un véhicule à moteur doté d'un essieu avant directeur (12) avec deux roues directrices (70, 71), dans lequel l'essieu avant directeur (12) est doté d'un entraînement individuel des roues qui utilise un contrôleur d'entraînement (11) pour entraîner individuellement les entraînements des roues (150, 151) assignés aux roues directrices (70, 71), et dans lequel un actionneur de direction électrique (6) est prévu pour contrôler la position des roues directrices (70, 71), 71), et dans lequel un actionneur de direction électrique (6) est prévu pour contrôler la position des roues directrices (70, 71), **caractérisé en ce que** le contrôleur d'entraînement (11) et l'actionneur de direction (6) sont conçus pour mettre en oeuvre le procédé tel que revendiqué dans l'une des revendications 1 à 7.

**Fig. 1**

**Fig. 2**

EP 3 740 392 B1

Fig. 3

Fig. 4

9

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004046985 A1
- DE 102010017647 A1
- WO 2006026259 A1
- DE 102009045234 A1
- DE 102005046776 A1